# FASCICULE DE BREVET EUROPEEN

(11) **EP 1 156 945 B1**
(45) Date de publication et mention de la délivrance du brevet: **16.08.2006**
(21) Numéro de dépôt: 01903870.2
(22) Date de dépôt: 04.01.2001
(51) Int. Cl.: B60Q 1/04

(54) **FEU DE SIGNALISATION APTE A ENGENDRER UN FLUX INCLINE, POUR VEHICULE AUTOMOBILE**
KRAFTFAHRZEUG- SIGNALLEUCHTE, DIE ZUR ERZEUGUNG EINES GENEIGTEN LICHTBÜNDELS GEEIGNET IST
SIGNAL LIGHT CAPABLE OF GENERATING AN INCLINED FLUX FOR MOTOR VEHICLE

(30) Priorité: 07.01.2000 FR 0000173
(43) Date de publication de la demande: 28.11.2001
(73) Titulaire: VALEO VISION, 93012 Bobigny Cédex (FR)
(72) Inventeur: MOLTO, Valérie, Valeo Vision, F-93012 Bobigny cedex (FR); TRIBOUILLER, Claude, Valeo Vision, F-93012 Bobigny cedex (FR); RIT, Jean, Valeo Vision, F-93012 Bobigny cedex (FR)
(74) Mandataire: Hervouet, Sylvie
(86) Numéro de dépôt international: PCT/FR2001/000026
(87) Numéro de publication internationale: WO 2001/049524

(56) Documents cités:
- DE-A- 3 239 754
- FR-A- 2 590 351
- FR-A- 2 599 469
- GB-A- 2 325 516
- PATENT ABSTRACTS OF JAPAN vol. 1996, no. 05, 31 mai 1996 (1996-05-31) & JP 08 007612 A (KOITO MFG CO LTD), 12 janvier 1996 (1996-01-12)

## Description

La présente invention concerne d'une façon générale les feux de signalisation de véhicules automobiles comme définie dans le préambule de la revendication et connue du GB-A-2 325 516.

Un feu de signalisation a généralement pour objet d'émettre de la lumière dans une plage de signalisation définie par un certain intervalle angulaire en hauteur et un autre intervalle angulaire, généralement plus grand, en largeur, ces intervalles étant définis par une « grille photométrique » imposée par les règlements ou les constructeurs, et qui définit en outre des minima de lumière à respecter en certains points de la grille.

La répartition de la lumière issue de la source lumineuse et le cas échéant d'un élément optique de récupération et/ou de concentration de flux (par exemple tel qu'un miroir incurvé occupant le fond du feu ou une lentille de Fresnel), est le plus souvent assurée par des éléments optiques, tels que des lentilles sphériques ou toriques (« billes ») formées en un réseau sur la surface interne de la glace ou voyant du feu.

En général, le galbe de cette glace, et principalement son inclinaison moyenne par rapport à un plan vertical transversal à l'axe du véhicule, est volontairement limité, précisément pour que la glace puisse travailler la lumière de manière à couvrir l'intégralité de la grille photométrique, sachant que cette couverture peut s'avérer très délicate, voire impossible à réaliser, si le galbe est important.

Par ailleurs, la tendance actuelle en matière de conception de feux de signalisation se traduit par des feux de grande profondeur, dont la glace est fortement galbée notamment pour s'inscrire dans la région du « retour d'aile » du véhicule, et dont on souhaite que la glace soit dépourvue des billes décrites plus haut, en étant soit lisse, soit pourvue d'éléments optiques (stries ou analogues) ne traitant la lumière que dans une seule dimension (de préférence verticale ou horizontale).

Cette tendance rend de plus en plus difficile la couverture convenable de la grille photométrique.

La présente invention vise à pallier ces limitations de l'état de la technique et à proposer un feu de signalisation qui, tout en satisfaisant aux tendances modernes, puisse remplir de façon convenable, notamment en largeur, la grille photométrique imposée.

Ainsi l'invention propose un feu de signalisation pour véhicule automobile avec les caractéristiques de la revendication 1. rapport audit axe principal caractérisé en ce que ladite zone réfléchissante auxiliaire comprend un morceau de paraboloïde de révolution focalisé au voisinage de la source et dont l'axe est orienté selon ladite direction moyenne.

Des aspects préférés, mais non limitatifs, du feu de signalisation selon l'invention sont les suivants :
- ladite zone réfléchissante auxiliaire est adjacente au miroir.
- ladite zone réfléchissante auxiliaire est formée sur un décrochement dans une deuxième cloison opposée à ladite cloison et à distance du miroir.
- les différentes sous-zones s'étendent selon une rangée.
- ladite rangée s'étend généralement verticalement.
- le miroir du feu est apte à étaler la lumière en section horizontale et/ou verticale, et la zone réfléchissante auxiliaire est apte à étaler la lumière dans la ou les section(s) correspondante(s).

D'autres aspects, buts et avantages de la présente invention apparaîtront mieux à la lecture de la description détaillée suivante de formes de réalisation préférées de celle-ci, donnée à titre d'exemples non limitatifs et faite en référence aux dessins annexés, sur lesquels :
la figure 1 est une vue schématique en coupe horizontale axiale d'un feu de signalisation selon une première forme de réalisation de l'invention,
la figure 2 est une vue de face du socle du feu de signalisation de la figure 1,
la figure 3 est une vue schématique en coupe horizontale axiale d'un feu de signalisation selon une deuxième forme de réalisation de l'invention.

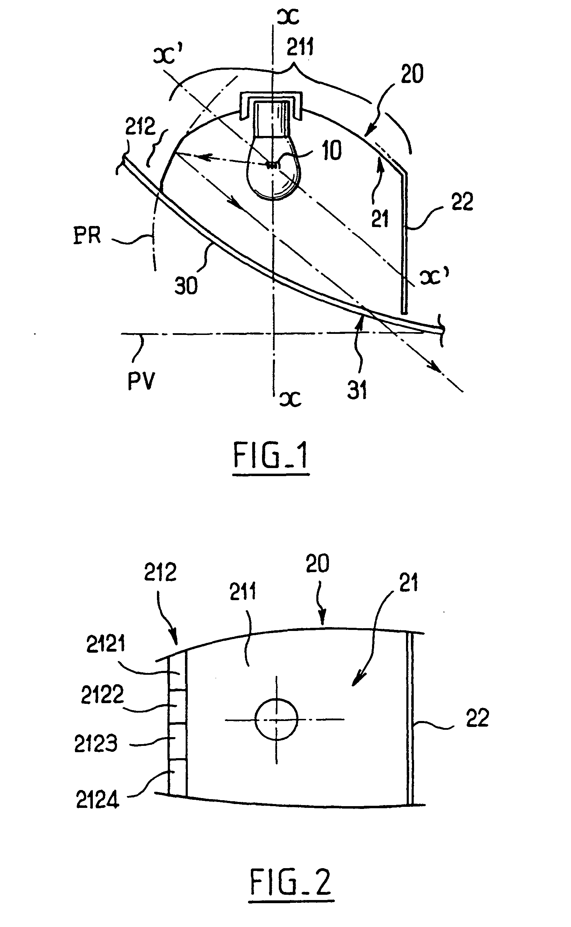

En référence aux dessins, et tout d'abord aux figures 1 et 2, on a représenté un feu de signalisation arrière gauche d'un véhicule automobile, qui comprend une source constituée par exemple par le filament incandescent 10 d'une lampe de signalisation conventionnelle, cette lampe étant montée dans une cavité d'un socle 20 dont la région de fond définit un miroir 21 destiné à récupérer le flux lumineux émis par la source vers l'arrière pour le renvoyer en direction d'une glace ou voyant 30, dont on observe qu'elle présente un galbe prononcé par rapport à un plan vertical PV transversal à l'axe optique x-x du feu, lui-même parallèle à l'axe longitudinal du véhicule. La cavité du socle est délimitée latéralement, du côté intérieur du véhicule, par une cloison 22.

Le miroir 21 possède une zone principale 211 destiné à préformer la partie principale du faisceau. Ce faisceau préformé peut être par exemple :
- un faisceau généralement parallèle (dans le cas où la partie 211 du miroir est un paraboloïde de révolution focalisé sur la source) ;
- un faisceau généralement parallèle en section verticale et divergent en section horizontale ;
- un faisceau généralement parallèle en section horizontale et divergent en section verticale ; ou encore
- un faisceau divergent à la fois en section horizontale et en section verticale.

Ces trois derniers faisceaux préformés sont réalisés, de façon classique en soi, par la partie 211 de miroir de conception appropriée.

Dans le premier cas, la glace 30 possède - de préférence sur sa face interne - des aménagements optiques assurant l'étalement de la lumière en direction horizontale et en direction verticale, en fonction des caractéristiques de la grille photométrique à remplir. Dans les deuxième et troisième cas, la glace est conçue pour étaler la lumière de façon contrôlée soit pour l'essentiel verticalement, soit pour l'essentiel horizontalement. Dans le quatrième cas, la glace étale peu ou n'étale pas la lumière ; elle peut alors être essentiellement lisse, et comporter le cas échéant des aménagements de décor.

Compte-tenu de la profondeur d'ensemble du feu et du galbe de la glace, un tel feu parvient difficilement à remplir la grille photométrique recherchée du côté intérieur du véhicule (vers la droite sur les figures 1 et 2), sachant que des inclinaisons latérales du rayonnement de 40° ou même davantage par rapport à l'axe x-x peuvent être désirées ou même imposées par la règlementation. On prévoit ainsi, selon l'invention, du côté du miroir situé à l'extérieur (vers la gauche sur les figures 1 et 2), une zone réfléchissante secondaire 212 destinée à réfléchir le rayonnement issu de la source 10 pour l'essentiel dans une direction désirée, inclinée par rapport à l'axe principal x-x.

Dans une forme de réalisation de base, la zone 212 est constituée par un morceau d'un paraboloïde de révolution PR dont le foyer F est sensiblement sur la source 10 et dont l'axe optique oblique x'-x' définit la direction moyenne recherchée pour le rayonnement réfléchi.

Dans ce cas, la zone 31 de la glace 30 qui est traversée par ce rayonnement auxiliaire comporte si nécessaire (selon la grille photométrique) des aménagements optiques capables d'étaler la lumière verticalement et/ou horizontalement, étant observé que ce sont ces mêmes aménagements qui vont traiter la lumière réfléchie par la zone principale 211 du miroir dans la direction de ladite zone 31.

Dans une première variante, on prévoit que la zone auxiliaire 212 du miroir 21 est constituée par une pluralité de sous-zones, ici quatre sous-zones 2121 à 2124, comme illustré sur la figure 2, dont les surfaces réfléchissantes sont destinées à réfléchir la lumière selon différentes directions (de préférence toutes obliques) et avec différentes divergences, ceci afin de pouvoir remplir la région latérale correspondante de la grille photométrique sans recourir seulement à des aménagements optiques au niveau de la zone 31 de la glace 30.

Ceci peut être réalisé en utilisant par exemple différents morceaux de paraboloïdes de révolution ayant des axes différents et dont au moins certains peuvent être défocalisés par rapport à la source 10.

Selon une autre variante, la zone auxiliaire 212 du miroir peut engendrer un faisceau auxiliaire de direction moyenne oblique, pré-étalé en largeur mais sensiblement parallèle en section verticale. Dans ce cas, des aménagements prévus dans la zone 31 de la glace réalisent l'étalement vertical voulu. Ceci convient particulièrement bien dans le cas où la zone principale 211 du miroir réalise un étalement latéral du faisceau principal et où la glace se charge de l'étalement vertical de celui-ci, par exemple à l'aide de stries horizontales.

Inversement, on peut prévoir que la zone auxiliaire 212 du miroir engendre un faisceau auxiliaire étalé en section verticale mais essentiellement parallèle en direction horizontale, auquel cas la glace 30 possède alors dans la zone 31 des stries verticales pour réaliser l'étalement horizontal.

Des surfaces réfléchissantes convenant aussi bien pour le fond 211 du miroir que pour sa zone auxiliaire 212 sont décrites par exemple dans le document FR 2 664 677 au nom de la Demanderesse.

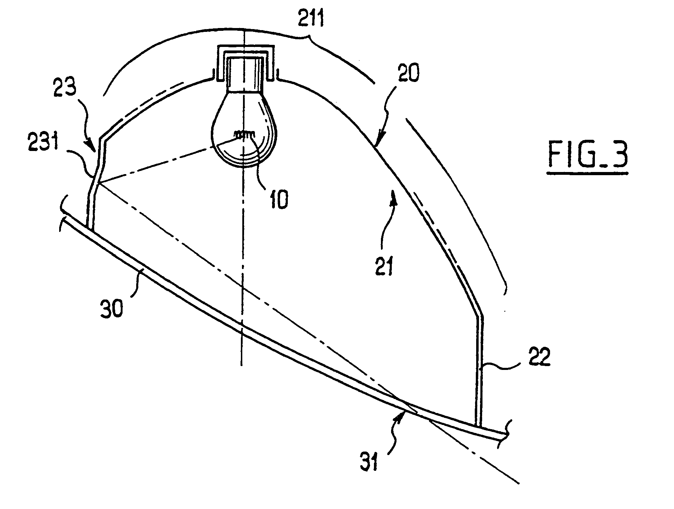

Une seconde forme de réalisation de l'invention est maintenant décrite en référence à la figure 3. Dans la situation illustrée sur cette figure, l'inclinaison souhaitée pour le faisceau auxiliaire, et l'importance du galbe de la glace, sont telles que la solution illustrée sur les figures 1 et 2 ne peut pas être adoptée telle quelle : en effet, la cloison 22 séparant le feu d'une fonction de signalisation voisine (ou constituant une paroi latérale du bloc de feux arrière) fait alors saillie vers l'arrière du véhicule (vers le bas sur la figure 3) d'une manière telle qu'elle occulterait une partie du rayonnement auxiliaire émis avec la zone auxiliaire 212 décrite en référence aux figures 1 et 2.

La solution consiste alors à former, dans une paroi ou cloison 23 du socle 20 opposée à la cloison 22, et à distance de la surface réfléchissante principale 211, un décrochement sur lequel est formée une zone réfléchissante auxiliaire 231 ayant un comportement optique analogue à celui de la zone réfléchissante auxiliaire 212 décrite plus haut, et pouvant être réalisée selon les mêmes techniques.

Du fait que la zone 231 est décalée vers l'arrière du véhicule (vers le bas sur la figure 3) par rapport au fond du feu qu'occupe la zone principale 211 du miroir, la cloison 22 n'est pas susceptible d'occulter le faisceau auxiliaire engendré par ladite zone 231.

Ainsi, grâce aux différentes formes de réalisation de la présente invention, on peut faire face à des situations délicates en matière d'éclairement latéral dans la grille photométrique réglementaire, sans avoir à modifier la conception générale du feu en termes de géométrie, d'encombrement, d'aspect éteint (style, etc.).

## Revendications

1. Feu de signalisation signalisation définie par un certain intervalle angulaire en pour véhicule automobile, délimité au moins d'un côté correspondant à l'intérieur du véhicule par une cloison (22) longeant le feu sur une profondeur substantielle et comprenant une source lumineuse (10), un élément récupérateur et/ou concentrateur de flux comprenant un miroir (211) disposé dans le fond d'une cavité du feu délimitée en partie par ladite cloison (22), et une glace (30), la cloison (22) possédant un bord libre au voisinage de la glace et l'élément récupérateur et/ou concentrateur de flux s'étendant en retrait par rapport audit bord libre de la cloison, le feu comprenant en outre des moyens optiques auxiliaires (212 ; 231) comprenant une zone réfléchissante auxiliaire (212 ; 231) située du côté opposé de ladite cloison par rapport à la lampe et apte à diriger directement sur la glace, au voisinage de la cloison (22), un flux lumineux auxiliaire dont la direction moyenne (x'-x') est sensiblement inclinée latéralement par rapport audit axe principal d'émission (x-x), **caractérisé en ce que** le feu posséde un axe principal d'émission (x-x) s'étendant sensiblement parallèlement à la cloison, et ladite zone réfléchissante auxiliaire (212 ; 231) comprend un morceau de paraboloïde de révolution focalisé au voisinage de la source et dont l'axe est orienté selon ladite direction moyenne (x'-x'), ladite zone réfléchissante auxiliaire (212 ; 231) comprenant au moins deux sous-zones (2121-2124) aptes à réfléchir la lumière selon des directions moyennes différentes et/ou avec des étalements différents.

2. Feu de signalisation selon la revendication 1, **caractérisé en ce que** ladite zone réfléchissante auxiliaire (212) est adjacente au miroir (211).

3. Feu de signalisation selon la revendication 1, **caractérisé en ce que** ladite zone réfléchissante auxiliaire (231) est formée sur un décrochement dans une deuxième cloison (23) opposée à ladite cloison (22) et à distance du miroir (211).

4. Feu de signalisation selon l'une des revendications précédentes, **caractérisé en ce que** les différentes sous-zones (2121-2124) s'étendent selon une rangée.

5. Feu de signalisation selon la revendication 4, **caractérisé en ce que** ladite rangée s'étend généralement verticalement.

6. Feu de signalisation selon l'une des revendications précédentes, **caractérisé en ce que** le miroir (211) du feu est apte à étaler la lumière en section horizontale et/ou verticale, et **en ce que** la zone réfléchissante auxiliaire (212 ; 231) est apte à étaler la lumière dans la ou les section(s) correspondante(s).

## Claims

1. Signal lamp for motor vehicle, defined by a given angular interval and delimited, at least on a side corresponding to the interior of the vehicle, by a partition (22) bordering the lamp to a substantial depth, and including a luminous source (10), a collecting and/or concentrating element for the flux including a mirror (211) disposed at the rear of a cavity of the lamp delimited partially by said partition (22), and a lens (30), the partition (22) having a free edge in the vicinity of the lens and the flux collecting and/or concentrating element extending rearwardly with respect to said free edge of the partition, the lamp additionally including auxiliary optical means (212; 231) comprising an auxiliary reflecting zone (212; 231) located on the side opposite said partition with respect to the bulb and able to direct an auxiliary luminous flux, the mean direction (x'-x') of which is substantially inclined laterally with respect to the principal emission axis (x-x), directly on to the lens adjacently to the partition (22), **characterised in that** the lamp has a principal emission axis (x-x) extending substantially parallel to the partition, and said auxiliary reflecting zone (212; 231) includes a portion of a paraboloid of revolution focused in the vicinity of the source and having an axis oriented in said mean direction (x'-x'), said auxiliary reflecting zone (212; 231) including at least two sub-zones (2121-2124) able to reflect the light in different mean directions and/or with different dispersions.

2. Signal lamp according to claim 1, **characterised in that** said auxiliary reflecting zone (212) is disposed adjacent to the mirror (211).

3. Signal lamp according to claim 1, **characterised in that** said auxiliary reflecting zone (231) is formed on an angled portion of a second partition (23) opposite said partition (22) and at a distance from the mirror (211).

4. Signal lamp according to any one of the preceding claims, **characterised in that** the different sub-zones (2121-2124) extend in a row.

5. Signal lamp according to claim 4, **characterised in that** said row extends substantially vertically.

6. Signal lamp according to any one of the preceding claims, **characterised in that** the mirror (211) of the lamp is able to disperse the light in a horizontal and/or vertical section, and **in that** the auxiliary reflecting zone (212; 231) is able to disperse the light in the corresponding section or sections.

## Patentansprüche

1. Kraftfahrzeugssignalleuchte, definiert durch ein bestimmtes Winkelintervall, die wenigstens an einer der Fahrzeuginnenseite entsprechenden Seite durch eine über eine beträchtliche Tiefe an der Leuchte entlang verlaufende Trennwand (22) begrenzt ist und eine Lichtquelle (10), ein Element zum Sammeln und/oder Bündeln des Lichtstroms mit einem Reflektor (211), der am Boden einer zum Teil durch die Trennwand (22) begrenzten Höhlung der Leuchte angeordnet ist, und eine Scheibe (30) umfasst, wobei die Trennwand (22) einen freien Rand in der Nähe der Scheibe aufweist und das Element zum Sammeln und/oder Bündeln des Lichtstroms bezüglich dieses freien Randes der Trennwand zurückversetzt verläuft, wobei die Leuchte ferner zusätzliche optische Mittel (212; 231) umfasst, die einen zusätzlichen Reflexionsbereich (212; 231) aufweisen, der bezüglich der Lampe an der der Trennwand gegenüberliegenden Seite angeordnet ist und einen zusätzlichen Lichtstrom unmittelbar auf die Scheibe zu lenken vermag, in der Nähe der Trennwand (22), dessen mittlere Richtung (x'-x') bezüglich der Hauptlichtabgaberichtung (x-x) im Wesentlichen seitlich geneigt ist,
**dadurch gekennzeichnet, dass** die Leuchte eine Hauptlichtabgaberichtung (x-x) besitzt, die im Wesentlichen parallel zu der Trennwand verläuft, und der zusätzliche Reflexionsbereich (212; 231) ein Stück eines Rotationsparaboloiden aufweist, der in der Nähe der Lichtquelle fokussiert ist und dessen Achse in der mittleren Richtung (x'-x') ausgerichtet ist, wobei der zusätzliche Reflexionsbereich (212; 231) wenigstens zwei Unterbereiche (2121-2124) aufweist, die das Licht in verschiedene mittlere Richtungen und/oder mit unterschiedlichen Auffächerungen zu reflektieren vermögen.

2. Signalleuchte nach Anspruch 1,
**dadurch gekennzeichnet, dass** der zusätzliche Reflexionsbereich (212) dem Reflektor (211) benachbart ist.

3. Signalleuchte nach Anspruch 1,
**dadurch gekennzeichnet, dass** der zusätzliche Reflexionsbereich (231) auf einem Rücksprung in einer der Trennwand (22) gegenüberliegenden zweiten Trennwand (23) und mit Abstand zum Reflektor (211) gebildet ist.

4. Signalleuchte nach einem der vorhergehenden Ansprüche,
**dadurch gekennzeichnet, dass** die verschiedenen Unterbereiche (2121-2124) in einer Reihe verlaufen.

5. Signalleuchte nach Anspruch 4,
**dadurch gekennzeichnet, dass** die Reihe allgemein vertikal verläuft.

6. Signalleuchte nach einem der vorhergehenden Ansprüche,
**dadurch gekennzeichnet, dass** der Reflektor (211) der Leuchte das Licht in horizontale und/oder vertikale Abschnitte aufzufächern vermag, und dass der zusätzliche Reflexionsbereich (212; 231) das Licht in dem bzw. den entsprechenden Abschnitte(n) aufzufächern vermag.
